# EUROPÄISCHE PATENTSCHRIFT

(11) **EP 1 621 320 B1**
(45) Veröffentlichungstag und Bekanntmachung des Hinweises auf die Patenterteilung: **18.07.2007**
(21) Anmeldenummer: 05010282.1
(22) Anmeldetag: 12.05.2005
(51) Int. Cl.: B29C 47/06, B29C 47/58, B29C 47/16

(54) **Koextrusionsadapter**
Co-extrusion adapter
Dispositif d'alimentation pour co-extrusion

(30) Priorität: 27.07.2004 DE 202004011742 U
(43) Veröffentlichungstag der Anmeldung: 01.02.2006
(73) Patentinhaber: Reifenhäuser GmbH & Co. Maschinenfabrik, 53844 Troisdorf (DE)
(72) Erfinder: Rübhausen, Anton, 53859 Niederkassel (DE); Siebigteroth, Peter, 53783 Eitorf (DE)
(74) Vertreter: Müller-Gerbes Wagner Albiger Patentanwälte

(56) Entgegenhaltungen:
- EP-A- 0 161 812
- EP-A- 0 315 304
- DE-A1- 3 741 793
- DE-U1- 29 820 347
- US-A- 4 197 069
- US-A- 5 066 443
- US-A- 5 147 195

## Beschreibung

Die Erfindung betrifft einen Koextrusionsadapter für eine Extrusionsanlage mit mehreren Extrudern und einem von diesen gespeisten Werkzeug zur Herstellung eines Koextrusionsverbundes aus thermoplastischem Kunststoff, wobei der Koextrusionsadapter einen Zentralkanal mit einem einlassseitigen Ende für den Anschluss eines Extruders und einem auslassseitigen Ende für den Anschluss des Werkzeuges aufweist, und der Koextrusionsadapter ferner mindestens einen Koextrusionskanal mit Einlassende und Auslassende aufweist, wobei an das Einlassende jeweils ein weiterer Extruder anschließbar ist und das Auslassende stromabwärts des einlassseitigen Endes des Zentralkanals in diesen einmündet und jedem Auslassende des mindestens einen Koextrusionskanals zugeordnet Verstellvorrichtungen vorgesehen sind, die aus einer Mehrzahl von Verstellelementen bestehen, welche sich gemeinsam über die Breite des Auslassendes erstrecken und mittels Stellantrieben unabhängig voneinander in der Weise verstellbar sind, dass die lichte Weite des jeweiligen Breitenabschnittes des Auslassendes veränderbar ist.

Derartige Koextrusionsadapter werden für die Zusammenführung von aus mehreren Extrudern stammenden Schmelzesträngen aus thermoplastischem Kunststoff etwa bei der Herstellung von Folien, Platten und Tafeln verwendet. Hierbei werden die einzelnen von den Extrudern bereitgestellten Schmelzen thermoplastischer Kunststoffe im Koextrusionsadapter in der gewünschten Schichtenlage aufeinandergeführt und nachfolgend gemeinsam dem Extrusionswerkzeug zur Herstellung des Koextrusionsverbundes zugeführt.

Bei der Aufeinanderschichtung von unterschiedlichen Kunststoffen innerhalb des Koextrusionsadapters, wie es in der Praxis häufiger Anwendungsfall ist, müssen unterschiedliche Eigenschaften der Kunststoffe, insbesondere unterschiedliche Viskositäten oder auch Abweichungen der gewählten Massendurchsatzverhältnisse der einzelnen Extruder ausgeglichen werden.

Hierzu ist es aus der gattungsbildenden DE-OS 37 41 793 bereits bekannt, am jeweiligen Auslassende der Koextrusionskanäle Verstellvorrichtungen vorzusehen, die aus einer Mehrzahl von Verstellelementen bestehen, welche sich gemeinsam über die Breite die Auslassendes erstrecken und mittels Stellantrieben in der Weise verstellbar sind, dass der jeweilige Breitenabschnitt des Auslassendes in seiner lichten Weite veränderbar ist. Auf diese Weise kann auf das Querschnittsprofil der koextrudierten Schicht Einfluss genommen werden, die durch den Koextrusionskanal dem Zentralkanal und der darin geförderten Schmelze zugeführt wird. Diese Einflussnahme erfolgt über die gesamte Breite des Koextrusionskanals individuell verschieden, so dass Schichtdickentoleranzen, Massendurchsatz sowie Viskositätsunterschiede ausgeglichen werden können. Bei dieser bekannten Vorrichtung kann jedoch stets nur auf das Profil des durch den Koextrusionskanal zugeführten Schmelzestromes Einfluss genommen werden, während eine zur Erzielung genauester Toleranzen innerhalb des Koextrusionsverbundes wünschenswerte Profilierung des im Zentralkanal verlaufenden Schmelzestromes nicht möglich ist.

Aus der DE 197 57 827 A1 ist es bekannt, einen Mehrschichtadapter mit spitz zulaufenden Teilern im Zusammenführungsbereich zwischen dem Zentralkanal und den Koextrusionskanälen anzuordnen, wobei die Teiler aus einer Vielzahl von Teilerlamellen über die gesamte Breite der Koextrusionskanäle ausgeführt sind und unabhängig voneinander verstellbar sind. Mit diesen Teilern ist zwar eine gleichzeitige Beeinflussung des Dickenprofiles sowohl der im Zentralkanal strömenden Schmelze wie auch der im Koextrusionskanal zuströmenden Schmelze möglich, jedoch kann auf die gewählte Einstellung ohne Produktionsunterbrechung von außen nicht Einfluss genommen werden. Vielmehr ist es erforderlich, den aus der Vielzahl der Teilerlamellen zusammengesetzten Teiler aus dem Mehrschichtadapter zu entfernen, nach Wunsch zu verstellen und sodann wieder einzusetzen, womit jeweils eine Produktionsunterbrechung verbunden ist. Die bekannte Vorrichtung ist daher im Wesentlichen nur für Modellversuche geeignet, bei denen eine möglichst optimale Gestalt eines Teilers ermittelt werden soll und von dem aus den Teilerlamellen bestehenden Modell nachfolgend ein massiver Teiler ohne Verstellmöglichkeit gefertigt und in der Produktion verwendet wird.

Schließlich ist es aus der EP 0 161 812 B1 bekannt, flügelartige und um eine in Breitenerstreckung der Koextrusionskanäle verlaufende Schwenkachse schwenkbare Trennelemente vorzusehen, mittels derer ein Ausgleich von Viskositäts- und Druckunterschieden in den einzelnen Kanälen vorgenommen werden kann, wobei jedoch das Trennelement freischwimmend schwenkbar gelagert ist, d. h. es ist nicht vorgesehen, mittels äußerer Verstellelemente eine gewünschte Verstellung vorzusehen. Da darüber hinaus das bekannte Trennelement durchgängig einstückig über die gesamte Breite des Koextrusionskanals verläuft, ist keine über die Breite des Koextrusionskanals unterschiedliche Profilierung der lichten Weite desselben möglich.

Die Erfindung hat sich die Aufgabe gestellt, ausgehend von einer gattungsgemäßen Vorrichtung gemäß DE-OS 37 41 793 einen Koextrusionsadapter dahingehend weiterzubilden, dass eine gleichzeitige Beeinflussung der Strömungen und der Dickenprofile sowohl im Zentralkanal wie auch im Bereich der Auslassenden der Koextrusionskanäle ermöglicht wird, und zwar individuell unterschiedlich über die gesamte Breite von Zentralkanal und den Auslassenden des mindestens einen Koextrusionskanals.

Zur Lösung der gestellten Aufgabe wird erfindungsgemäß die Ausbildung eines Koextrusionsadapters gemäß den Merkmalen des Patentanspruches 1 vorgeschlagen.

Vorteilhafte Ausgestaltungen und Weiterbildungen der Erfindung sind Gegenstand der Unteransprüche.

Die erfindungsgemäße Lösung besteht darin, dass die Verstellelemente an ihrem dem Auslassende zugewandten Ende einen keilförmigen Justierabschnitt aufweisen, dessen eine Keilfläche dem Zentralkanal und dessen andere Keilfläche dem Auslassende des Koextrusionskanals zugewandt ist und der Justierabschnitt der Verstellelemente mittels der Stellantriebe um eine in Breitenerstreckung des Auslassendes verlaufende Achse verschwenkbar ist, so dass bei einer Vergrößerung der lichten Weite des jeweiligen Breitenabschnittes des Auslassendes der entsprechende Breitenabschnitt des Zentralkanals verengt wird und umgekehrt.

Erfindungsgemäß ist es somit möglich, über die gesamte Breite des Auslassendes eines Koextrusionskanals die einzelnen Verstellelemente mittels ihrer jeweiligen Stellantriebe individuell gemäß dem gewünschten Dickenprofil so zu verstellen, dass in den jeweiligen Breitenabschnitten des Auslassendes die gewünschte lichte Weite vorliegt. Gleichzeitig wird im entsprechenden Breitenabschnitt des Zentralkanals eine entgegengesetzte Verstellung der lichten Weite desselben bewirkt, so dass mittels der Verstellelemente sowohl eine Profilierung des im Zentralkanal strömenden Schmelzestromes wie auch eine gleichzeitige entsprechende Profilierung des über das Auslassende des Koextrusionskanals in den Zentralkanal einmündenden Koextrusionsschmelzestromes bewirkt werden kann. Somit ermöglicht der erfindungsgemäße Koextrusionsadapter, sämtliche Schichten des herzustellenden Koextrusionsverbundes mittels der Verstellelemente in ihrer Profilierung wunschgemäß zu beeinflussen.

Hierbei erfolgt stets eine wechselweise Beeinflussung des Zentralkanals und des Koextrusionskanals in der Weise, dass bei Vergrößerung der lichten Weite des Auslassendes des Koextrusionskanals in einem vom jeweiligen Verstellelement überdeckten Breitenabschnitt der entsprechende Breitenabschnitt des Zentralkanals dementsprechend verkleinert bzw. verengt wird und umgekehrt.

In einer bevorzugten Ausführungsform der Erfindung sind die Verstellelemente benachbart zum Justierabschnitt mit einem zylindrisch verdickten Lagerungsabschnitt ausgebildet, dessen Mittelachse die Schwenkachse bildet und die Verstellelemente sind mit dem jeweiligen zylindrischen Lagerungsabschnitt in entsprechende Aufnahmen im Koextrusionsadapter verschwenkbar einsteckbar. Auf diese Weise wird eine einfach Montage und Herstellung des Koextrusionsadapters ermöglicht, gleichzeitig werden die Verstellelemente trotz der sehr hohen in einem Koextrusionsadapter auftretenden Drucke leicht um ihre Schwenkachse schwenkbar gehaltert und sind auch gegenüber der Schmelze in dem Zentralkanal und Koextrusionskanal abgedichtet.

Darüber hinaus sind die Verstellelemente bevorzugt an ihrem dem Justierabschnitt abgewandten Ende mit einem Verstellhebel ausgebildet, der mit dem Stellantrieb verbindbar ist, so dass über diesen Stellantrieb von außen die gewünschte Verschwenkbewegung der einzelnen Verstellelemente mit ihren Justierabschnitten bewirkbar ist.

Die Verstellelemente sind hierbei bevorzugt einstückig mit Justierabschnitt, verdicktem Lagerungsabschnitt und Verstellhebel ausgebildet.

Als Stellantriebe sind bevorzugt jeweils von der Außenseite des Koextrusionsadapters her zugängliche und in diesen ein- bzw. aus diesem ausschraubbare Gewindestangen vorgesehen, die an ihrem dem Verstellelement zugewandten Ende mit einem Mitnehmer für das Verstellelement versehen sind. Darüber hinaus können selbstverständlich auch andere Verstellelemente, wie Translatoren, motorische Linearantriebe und dergleichen mehr vorgesehen werden.

Darüber hinaus können die Stellantriebe auch mit einer Messeinrichtung für den Verstellweg ausgerüstet werden. Im einfachsten Falle dient ein mit dem Mitnehmer des Stellantriebes starr verbundener Messbolzen als Messeinrichtung, der entsprechend der Betätigung des Stellantriebes mehr oder weniger weit aus dem Koextrusionsadapter herausragt und an dem Grad sodann der bewirkte Verstellweg abgelesen werden kann. Es ist ferner möglich, Wegaufnehmer, beispielsweise induktive Wegaufnehmer innerhalb des Verstellantriebes vorzusehen, die den jeweils zurückgelegten Verstellantrieb messen und beispielsweise an eine Anlagensteuerung weitergeben können.

Darüber hinaus ist es möglich, ein Verbindungselement für die Stellantriebe der sich gemeinsam über die Breite eines Auslassendes erstreckenden Verstellelemente vorzusehen, mittels dessen diese Stellantriebe gemeinsam parallel verstellbar sind. Es ist somit ermöglicht, durch Betätigung jedes einzelnen Stellantriebes zunächst ein individuelles Profil für die lichte Weite des Auslassendes des Koextrusionskanals und des Zentralkanals vorzugeben und sodann dieses Profil parallel durch gleichzeitige Betätigung aller über das Verbindungselement verbundener Stellantriebe zu verschieben.

Zum Ausgleich von Viskositätsschwankungen sowie unterschiedlichen Massendurchsätzen der einzelnen durch die Koextrusionskanäle geförderten Schmelzen kann dem Auslassende des Koextrusionskanals vorgelagert ein Verteilbereich vorgesehen werden, in welchem ein Stauelement für die herangeführte Kunststoffschmelze angeordnet ist. Dieses Stauelement kann bevorzugt austauschbar sein, so dass es mit unterschiedlichen Konturen ausführbar und somit an unterschiedliche rheologische Eigenschaften des über den jeweiligen Koextrusionskanal geführten thermoplastischen Kunststoffes anpassbar ist.

Eine bevorzugte Ausführungsform des erfindungsgemäßen Koextrusionsadapters sieht vor, dass er zwei Seitenplatten umfasst, zwischen denen zwei voneinander unter Ausbildung des Zentralkanals beabstandete Kanalteile angeordnet sind und jedes Kanalteil mit spiegelsymmetrisch zur Mittelachse des Zentralkanals angeordneten Koextrusionskanälen und zugehörigen Verstellelementen und Stellantrieben ausgerüstet ist. Beispiele derartiger Koextrusionsadapter umfassen solche mit einem oder mehreren Koextrusionskanälen, beispielsweise ein bis drei Koextrusionskanälen pro Kanalteil, so dass insgesamt sechs Koextrusionskanäle sowie der Zentralkanal für die Führung von Kunststoffschmelzen vorhanden sind und demzufolge ein maximal siebenschichtiger Koextrusionsverbund aus thermoplastischen Kunststoffen herstellbar ist. Selbstverständlich ist es jedoch auch denkbar, noch weitere Koextrusionskanäle für weitere Schichten vorzusehen.

Eine besonders einfache Herstellung dieses vorangehend erläuterten Koextrusionsadapters ergibt sich, wenn die Einlassenden der jeweiligen Koextrusionskanäle im Bereich der Trennfugen zwischen den Seitenteilen und den Kanalteilen angeordnet sind. In diesem Falle ist es möglich, bei Herstellung der Seitenteile und der Kanalteile die Einlassenden der Koextrusionskanäle jeweils hälftig z. B. durch Fräsen in die der späteren Trennfuge zugewandten Oberflächen der Seitenteile und Kanalteile einzufräsen, wobei dann beim Zusammenfügen der Seitenteile mit den Kanalteilen die gewünschten Einlassenden der Koextrusionskanäle ausgebildet werden. Auf diese Weise können auch schwierige Kanalverläufe der Koextrusionskanäle auf einfache Weise durch Fräsen hergestellt werden, so dass auf die bislang verwendeten aufwendigen Erodierverfahren verzichtet werden kann.

Eine besonders vorteilhafte Ausführungsform des erfindungsgemäßen Koextrusionsadapters sieht vor, dass der mindestens eine Koextrusionskanal bei Nichtgebrauch von den zugehörigen Verstellelementen gegenüber dem Zentralkanal abdichtbar ist. Hierdurch wird eine große Flexibilität des Koextrusionsadapters hergestellt, da dieser stets mit einer maximal zu erwartenden Anzahl an Koextrusionskanälen ausgebildet werden kann und bei Herstellung von Koextrusionsverbunden, für die aufgrund geringerer Schichtenanzahlen weniger Koextrusionskanäle benötigt werden, die übrigen nicht benötigen Koextrusionskanäle einfach mittels der Verstellelemente verschlossen werden, ohne dass eine aufwendige Umrüstung erforderlich wäre.

Die Erfindung wird nachfolgend in weitern Einzelheiten anhand von Ausführungsbeispielen in der Zeichnung erläutert. Es zeigen:
- Figur 1: in schematisierter Darstellung das Funktionsprinzip eines erfindungsgemäßen Koextrusionsadapters,
- Figur 2: die Einzelheit X gemäß Figur 1 in vergrößerter Darstellung,
- Figur 3: eine Ausführungsform des erfindungsgemäßen Koextrusionsadapters im vertikalen Schnitt,
- Figur 4: einen Schnitt durch den erfindungsgemäßen Koextrusionsadapter entlang der Linien V-V in Figur 3,
- Figur 5: in perspektivischer Darstellung eine weitere Ausführungsform des erfindungsgemäßen Koextrusionsadapters,
- Figur 6: die Aufsicht auf den erfindungsgemäßen Koextrusionsadapter gemäß Figur 5.

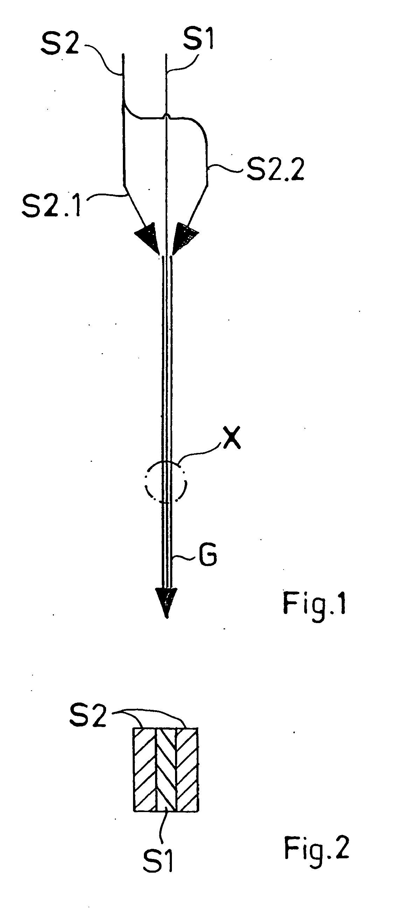

In der Figur 1 ist das Funktionsprinzip eines Koextrusionsadapters zur Herstellung eines mehrschichtigen Koextrusionsverbundes aus thermoplastischem Kunststoff dargestellt. Aus zwei unterschiedlichen und hier nicht dargestellten Extrudern werden unterschiedliche Schmelzeströme S1, S2 aus gleichen oder unterschiedlichen thermoplastischen Kunststoffen hergestellt und unter hohem Druck einem Koextrusionsadapter zugeführt. Hierbei wird der Schmelzestrom S1 im Wesentlichen geradlinig ohne Umlenkung durch einen nachfolgend näher erläuterten Zentralkanal des Koextrusionsadapters hindurch in Richtung auf ein Werkzeug geführt.

Im Gegensatz dazu wird der Schmelzestrom S2 in zwei Teilströme S2.1 und S2.2 aufgeteilt und über Koextrusionskanäle beidseits dem im Zentralkanal strömenden Strom S1 zugeführt und unter Ausbildung eines dreischichtigen aus der Figur 2 ersichtlichen Verbundes aufeinander geschichtet, wobei die Schmelzeströme S2 die Außenschichten und der Schmelzestrom S1 die Innenschicht des solchermaßen gebildeten Gesamtstromes G bilden, der nachfolgend dem nicht dargestellten Werkzeug zugeführt wird. Wegen möglicher rheologischer Unterschiede in den einzelnen Kunststoffen der Schmelzestränge S1, S2 und/oder unterschiedlichen Massendurchsätzen muss dem Moment der Zusammenführung der Schmelzestränge S1, S2 bzw. S2.1 und S2.2 große Aufmerksamkeit gewidmet werden.

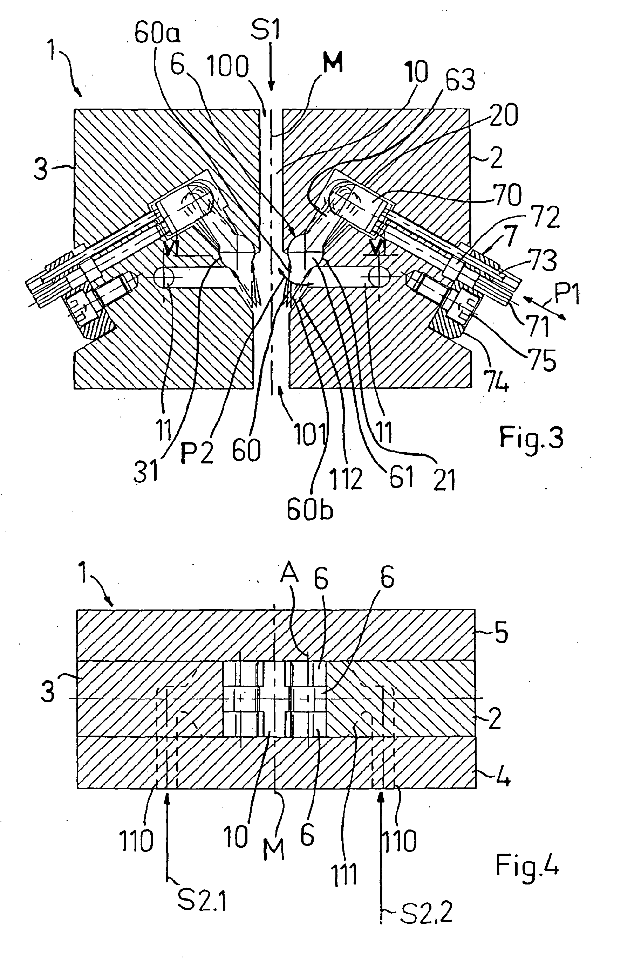

Die Figuren 3 und 4 zeigen ein Ausführungsbeispiel eines vorangehend im Prinzip beschriebenen Koextrusionsadapters 1, der zwei voneinander unter Ausbildung des Zentralkanals 10 beabstandete Kanalteile 2, 3 umfasst, in denen jeweils ein Koextrusionskanal 11 ausgebildet ist. Die Kanalteile 2, 3 sind spiegelsymmetrisch zur Mittelachse des Zentralkanals 10 ausgebildet.

Beide Kanalteile 2, 3 werden mittels Seitenplatten 4, 5 verbunden, die gleichzeitig auch die Schmalseiten des einen rechteckigen Querschnitt aufweisenden Zentralkanals 10 begrenzen.

Aufgrund der Achsensymmetrie können weitere Einzelheiten nunmehr anhand eines Kanalteiles und der darin angeordneten weiteren Bauteile erläutert werden, sie gelten entsprechend auch für das spiegelsymmetrisch ausgebildete weitere Kanalteil.

Entsprechend der Erläuterungen zu Figur 1 tritt der von einem ersten Extruder herangeführte Schmelzestrom S1 in den Zentralkanal 10 an einem einlassseitigen Ende 100 ein und strömt zunächst allein durch diesen Zentralkanal 10 bis zu dem Bereich, in welchem die beiden Koextrusionskanäle 11 in den Seitenteilen 2, 3 mit ihren jeweiligen Auslassenden 112 in den Zentralkanal 10 einmünden. Die zuvor mittels eines hier nicht dargestellten Aufteilungselementes aufgeteilten Teilströme S2.1 und S2.2 des Schmelzestromes S2 gelangen über beispielsweise im Seitenteil 4 eingebrachte Einlassenden 110 zunächst in einen Verteilbereich 111, in welchem sie auf die gesamte Breite des Auslassendes 112 verbreitert werden und treten sodann über die gesamte Breite des Auslassendes 112 in den mit gleicher Breite ausgeführten Zentralkanal 10 ein. Die über die Koextrusionskanäle 11 herangeführten Schmelzeströme S2.1 und S2.2 schließen den zuvor im Zentralkanal 10 geförderten Schmelzestrom S1 beidseits ein, so dass sich der in der Figur 2 ersichtliche Schichtenverbund ergibt, welcher sodann den Zentralkanal 10 über das auslassseitige Ende 101 an ein hier nicht dargestelltes angeschlossenes Werkzeug zur Herstellung eines Koextrusionsverbundes verlässt. Dementsprechend ist der Zentralkanal 10 im Zuführungsbereich der beiden Koextrusionskanäle 11 stufenförmig erweitert, um genügend Platz für die zugeführten Schmelzströme aufzuweisen.

Um Schwankungen im Massendurchsatz der Schmelzeströme S1, S2 sowie gegebenenfalls vorhandene unterschiedliche rheologische Eigenschaften der einzelnen Kunststoffe auszugleichen, sind jedem Auslassende 112 der Koextrusionskanäle 11 zugeordnet Verstellelemente 6 vorgesehen, die in Breitenerstreckung des Auslassendes 112 und des mit gleicher Breite ausgebildeten Zentralkanals 10 nebeneinander angeordnet sind, wie insbesondere aus der Aufsicht gemäß Figur 4 ersichtlich ist. Im dargestellten Ausführungsbeispiel sind insgesamt drei Verstellelemente 6 nebeneinander bzw. in der Darstellung gemäß Figur 3 hintereinander angeordnet, um die gesamte Breite des Auslassendes 112 der Koextrusionskanäle 11 und die gesamte Breite des Zentralkanals 10 zu überdecken.

Jedes Verstellelement 6 umfasst hierbei an ihrem dem Auslassende 112 zugewandten Ende einen spitz zulaufenden keilförmigen Justierabschnitt 60, der sich in Strömungsrichtung durch den Zentralkanal betrachtet verjüngt und dessen eine Keilfläche 60a dem Zentralkanal 10 und dessen andere Keilfläche 60b dem Auslassende 112 des Koextrusionskanals 11 zugewandt ist. Demzufolge steht der Justierabschnitt 60 im Bereich seiner beiden Keilflächen 60a, 60b beidseits mit Schmelze in Kontakt, nämlich im Bereich der Keilfläche 60a mit der im Zentralkanal 10 geförderten Schmelze und im Bereich der Keilfläche 60b mit der aus dem Auslassende 112 austretenden Schmelze des Koextrusionskanals 11. Die Vereinigung der Schmelzeströme aus dem Zentralkanal 10 und dem Koextrusionskanal 11 findet an der Keilspitze des Justierabschnittes 60 statt. Zur Vermeidung einer zu starken Richtungsänderung ist hierbei das Auslassende 112 des Koextrusionskanals 11 bereits in Richtung auf die Strömungsrichtung durch den Zentralkanal 10 angeschrägt ausgebildet.

Anschließend an den Justierabschnitt 60 umfasst jedes Verstellelement 6 sodann einen zylindrisch verdickten Lagerungsabschnitt 61, mit welchem die Verstellelemente 6 in entsprechende Aufnahmen 21 in den jeweiligen Kanalteilen 2, 3 des Koextrusionsadapters 1 eingesteckt sind. Dieser zylindrisch verdickte Lagerungsabschnitt 61 ist exakt an die Aufnahmen 21 in den Kanalteilen 2, 3 angepasst, so dass ein Durchtritt von Schmelze aus dem Zentralkanal 10 und/oder dem Koextrusionskanal 11 entlang der Fuge zwischen Lagerungsabschnitt 61 und Aufnahme 21 verhindert wird, gleichzeitig jedoch eine Verschwenkbarkeit des Lagerungsabschnittes und des daran angeformten Justierabschnittes 60 um die aus der Figur 4 ersichtliche und in Breitenerstreckung der Auslassenden 112 des Koextrusionskanals 11 verlaufende Achse A gewährleistet wird. Die Mittelachse des Lagerungsabschnittes 61 bildet in diesem Falle gleichzeitig die Schwenkachse A.

Somit ist infolge der schwenkbaren Lagerung des Lagerungsabschnittes 61 innerhalb der Kanalteile 2, 3 eine Verschwenkbewegung des keilförmigen Justierabschnittes 60 gemäß Pfeil P2 um die Schwenkachse A möglich.

Dies hat zur Folge, dass je nach Verschwenkbewegung in Pfeilrichtung P2 die lichte Weite des jeweiligen von einem Justierabschnitt 60 überspannten Breitenabschnittes des Auslassendes 112 vergrößerbar oder verkleinerbar ist und entsprechend gegensätzlich sich der jeweilige Breitenabschnitt des Zentralkanals 10 in seiner lichten Weite verkleinert oder vergrößert.

Wird demgemäß durch Verschwenken des Justierabschnittes 60 in Pfeilrichtung P2 nach links gemäß Figur 3 die lichte Weite des Auslassendes 112 vergrößert, so wird gleichzeitig die lichte Weite des Zentralkanals 10 in diesem Breitenabschnitt entsprechend verengt und umgekehrt. Dies ist darauf zurückzuführen, dass die Keilflächen 60a, 60b des Justierabschnittes 60 einerseits mit dem Schmelzestrom im Zentralkanal 10 und andererseits mit dem Schmelzestrom im Koextrusionskanal 11 bzw. dessen Auslassende 112 in Kontakt stehen, so dass die entsprechende wechselweise Beeinflussung ermöglicht ist.

Für die entsprechende Verstellung bzw. Verschwenkung der Justierabschnitte 60 weist jedes Verstellelement 6 an seinem dem Justierabschnitt 60 abgewandten Ende einen Verstellhebel 63 auf, der mit einem Stellantrieb 7 in Wirkverbindung steht.

Der Stellantrieb 7 besteht aus einer außenseitig aus den Kanalteilen 2, 3 des Koextrusionsadapters 1 herausgeführten Gewindestange 71, die durch Angriff eines Drehwerkzeuges in Pfeilrichtung P1 in das jeweilige Kanalteil 2 bzw. 3 hineingeschraubt bzw. aus diesem herausgeschraubt werden kann. An ihrem dem Stellelement 6 zugewandten Ende weist die Gewindestange 71 einen Mitnehmer 70 auf, der mit dem Verstellhebel 63 verbunden ist, so dass über Betätigung der Gewindestange 71 in Pfeilrichtung P1 die gewünschte Verschwenkbewegung des Justierelementes 60 in Pfeilrichtung P2 bewirkbar ist.

Das Ein- bzw. Ausschrauben der Gewindestangen 71 wird durch eine mittels einer Konterplatte 74 und Schrauben 75 ortsfest gehaltene Gewindemutter 72 ermöglicht, durch welche die Gewindestange 71 hindurchgeschraubt wird.

Der jeweilige Verschiebeweg der Gewindestange 71 kann darüber hinaus über einen starr am Mitnehmer 70 befestigten Messbolzen 73 jederzeit unmittelbar von außen abgelesen und abgemessen werden.

Es versteht sich, dass zur Schaffung einer ausreichenden Beweglichkeit des Stellantriebes 7 und des Justierelementes 6 die beiden Kanalteile 2, 3 jeweils mit entsprechend großen Ausnehmungen 20 versehen sind, die die vorgenannten Bauteile entsprechend ihrer möglichen Bewegung aufnehmen.

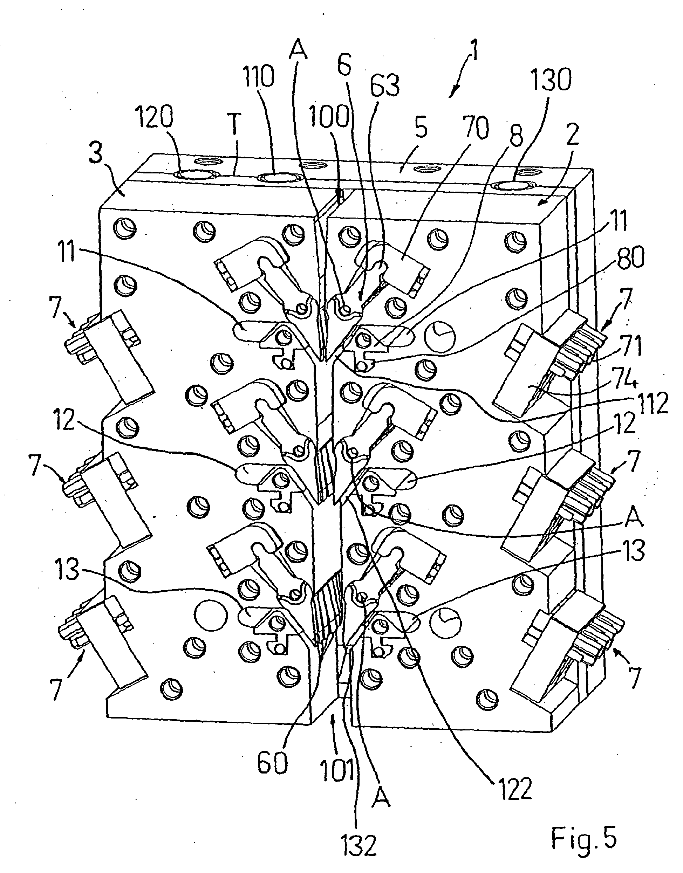

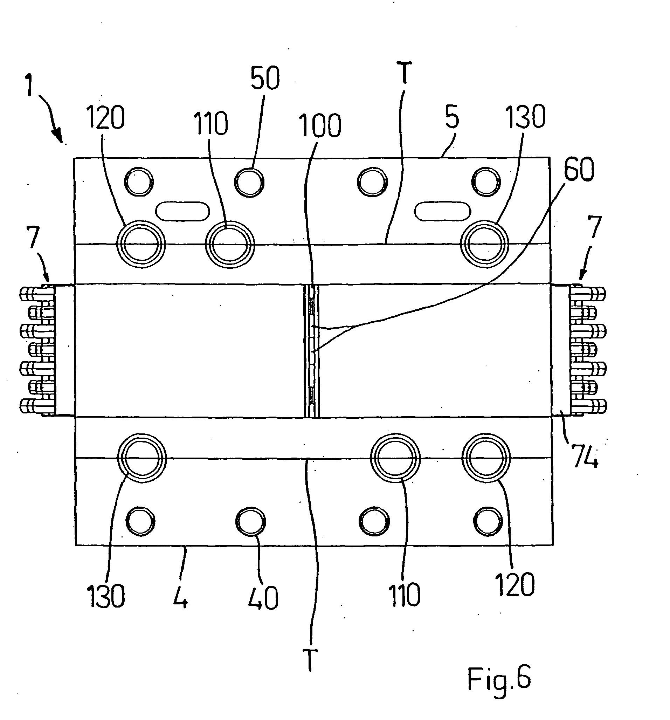

In den Figuren 5 und 6 ist eine weitere Ausführungsform eines Koextrusionsadapters dargestellt, bei dem gleiche Teile zu dem in den Figuren 3 und 4 dargestellten und vorangehend beschriebenen Koextrusionsadapter mit gleichen Bezugszeichen versehen sind und nachfolgend zur Vermeidung von Wiederholungen nicht nochmals gesondert beschrieben werden.

Im Gegensatz zu dem in den Figuren 3 und 4 dargestellten Koextrusionsadapter, der in jedem Kanalteil 2, 3 über lediglich einen Koextrusionskanal 11 verfügt, so dass insgesamt ein maximal dreischichtiger Koextrusionsverbund herstellbar ist, verfügt der in den Figuren 5 und 6 dargestellte Koextrusionsadapter 1 in jedem seiner Kanalteile 2, 3 über drei in Strömungsrichtung durch den Zentralkanal 10 betrachtet aufeinanderfolgend angeordnete Koextrusionskanäle 11, 12, 13 mit entsprechenden Auslassenden 112, 122, 132, so dass insgesamt ein maximal siebenschichtiger Koextrusionsverbund mit in diesem dargestellten Koextrusionsadapter 1 herstellbar ist.

Die Kanalteile 2, 3 sind zwischen Seitenteilen 4, 5 angeordnet, wobei in der Darstellung gemäß Figur 5 das Seitenteil 4 entfernt wurde.

Auch bei diesem Ausführungsbeispiel ist die Konfiguration und Ausgestaltung der Kanalteile 2, 3 sowie ihrer darin angeordneten Koextrusionskanäle sowie Verstellelementen und Stellantrieben übereinstimmend mit dem Ausführungsbeispiel gemäß Figuren 3 und 4 so gewählt, dass sie jeweils zur durch den Zentralkanal 10 verlaufenden Mittelachse M spiegelsymmetrisch ausgebildet sind, so dass deren Ausbildung stellvertretend anhand eines Koextrusionskanals erläutert werden kann.

Aus der perspektivischen Darstellung gemäß Figur 5 und auch der Aufsicht gemäß Figur 6 erkennt man, dass die jeweiligen, einem Auslassende 112, 122, 132 der Koextrusionskanäle 11, 12, 13 zugeordneten Verstellelemente 6 in unterschiedlicher Breite ausgeführt sein können, wobei die mittleren Verstellelemente 6 eine größere Breite als die äußeren Verstellelemente 6 aufweisen, was anhand der mit Bezugsziffer 60 versehenen Justierabschnitte des Koextrusionskanals 13 besonders augenscheinlich wird. Die Justierabschnitte 60 können bevorzugt eine Breite von 5-30 mm, insbesondere 10 - 25 mm aufweisen.

Im Betrieb des in den Figuren 5 und 6 dargestellten Koextrusionsadapters tritt zunächst ein Schmelzestrom S1 über das einlassseitige Ende 100 in den Zentralkanal 10 ein, woraufhin über die Koextrusionskanäle 11 in den Kanalteilen 2, 3 herangeführte Schmelzeströme außenseitig auf diesen aufgelegt werden. Nachfolgend wird auf den nunmehr dreischichtigen und in entsprechend erweiterten Abschnitt des Zentralkanals 10 weitergeführten Schmelzestrom beidseits eine weitere Außenschicht aus den Koextrusionskanälen 12 aufgelegt und weiter nachfolgend auf den nunmehr fünfschichtigen Koextrusionsverbund eine weitere Außenschicht aus den Koextrusionskanälen 13 aufgelegt, so dass insgesamt ein siebenschichtiger Koextrusionsverbund gebildet ist und über das auslassseitige Ende 101 einem nicht dargestellten Werkzeug zugeführt werden kann. Hierbei wird über die einzelnen an den Auslassenden 112, 122, 132 der Koextrusionskanäle 13 vorgesehenen Verstellelemente 6 in der bereits beschriebenen Weise eine individuelle und über die Breitenerstreckung bedarfsweise unterschiedliche Profilierung sowohl des jeweils eintretenden Schmelzestromes aus den Koextrusionskanälen 11, 12, 13 wie auch eine gleichzeitige entgegengesetzte Profilierung des sich im Zentralkanal 10 bewegenden Schmelzestromes ermöglicht.

Die jeweilige Zuführung der einzelnen Schmelzen zum einlassseitigen Ende 100 des Zentralkanals und den Koextrusionskanälen 11, 12, 13 ist insbesondere aus der Aufsicht gemäß Figur 6 ersichtlich.

Über einen dem Koextrusionsadapter 1 vorgeschalteten, hier jedoch nicht dargestellten Adapter gelangt ein erster Schmelzestrom aus einem ersten Extruder unmittelbar zum offenen einlassseitigen Ende 100 des Zentralkanals 10 und tritt dort oberseitig in den Koextrusionsadapter 1 ein.

Die den Koextrusionskanälen 11, 12, 13 in den jeweiligen Kanalteilen 2, 3 zuzuführenden Schmelzen werden jeweils über Einlassenden 110, 120, 130 in den Koextrusionsadapter 1 eingeleitet und gelangen über ein inneres Kanalsystem in einen hier nicht separat gekennzeichneten Verteilbereich, der jedoch bereits anhand der Figuren 3 und 4 erläutert worden ist, von wo aus die jeweilige Schmelze zum Auslassende 112, 122, 132 der Koextrusionskanäle 11, 12, 13 und letztlich in den Zentralkanal 10 gelangt. Zum Ausgleich von eventuell vorhandenen rheologischen Unterschieden der einzelnen Schmelzen sind jedem Auslassende 112, 122, 132 der Koextrusionskanäle 11, 12, 13 vorgelagert Stauelemente 8 vorgesehen, über welche die Schmelzen vor ihrem Eintritt in das jeweilige Auslassende 112, 122, 132 geleitet werden. Diese Stauelemente 8 können durch Wahl einer entsprechenden Kontur individuell an die jeweiligen rheologischen Eigenschaften der geförderten Kunststoffschmelze und des Massendurchsatzes angepasst werden und sind mittels angeformter Fußteile 80 in entsprechenden Einstecknuten der Kanalteile 2, 3 austauschbar gehaltert, so dass eine jeweilige individuelle Anpassung an die verarbeiteten thermoplastischen Kunststoffe erfolgen kann.

Um das vorangehend bereits erwähnte Kanalsystem ausgehend von den Einlassenden 110, 120, 130 bis zu den Auslassenden 112, 122, 132 besonders einfach fertigen zu können, sind die Einlassenden 110, 120, 130 und der fortsetzende Kanalabschnitt im Bereich der Trennfugen T zwischen den Seitenteilen 4, 5 und den Kanalteilen 2, 3 jeweils hälftig eingebracht, so dass sie bei der Herstellung der Seitenteile 4, 5 und Kanalteile 2, 3 durch Einfräsungen in der der späteren Trennfuge T zugewandten jeweiligen Oberfläche mit geringem Fertigungsaufwand hergestellt werden können. Auf diese Weise kann bei der Ausbildung der Einlassenden 110, 120, 130 und der nachfolgenden Kanalabschnitte der jeweiligen Koextrusionskanäle 11, 12, 13 auf aufwendige Verfahren, wie Erodieren verzichtet werden.

Darüber hinaus erkennt man in der Zeichnung gemäß Figur 6 noch weitere Bohrungen 40, 50 in den Seitenteilen 4, 5, in welchen Temperierungselemente aufgenommen werden können und/oder Adapter für die Extruder befestigt werden kann.

Es versteht sich, dass den einzelnen Einlassenden 110, 120 bzw. 130 der in beiden Kanalteilen 2, 3 ausgebildeten und spiegelsymmetrisch gegenüberliegenden Koextrusionskanälen 11, 12, 13 jeweils ein auch gemäß Figur 1 aufgeteilter und von einem Extruder stammender Schmelzestrom zugeführt werden kann, wie es auch möglich ist, jedem Einlassende 110, 120, 130 eines Koextrusionskanals 11, 12, 13 in den beiden Seitenteilen 2, 3 jeweils unterschiedliche Schmelzeströme aus separaten Extrudern zuzuführen.

Schließlich ist es noch möglich, einzelne Koextrusionskanäle 11 bei Nichtgebrauch durch entsprechendes Verschließen des Auslassendes 112, 122, 132 mittels entsprechender Bewegung der Verschlusselemente 6 gegenüber dem Zentralkanal 10 abzudichten, so dass trotz Ausbildung von 6 Koextrusionskanälen 11, 12, 13 für den entsprechend siebenschichtige Koextrusionsverbunde auch Koextrusionsverbunde mit einer geringeren Schichtenanzahl hergestellt werden können und die hierbei nicht benötigten Koextrusionskanäle 11 mittels der Verschlusselemente 6 einfach verschlossen werden. Auf diese Weise werden Umrüstzeiten beim Koextrusionsadapter minimiert.

## Patentansprüche

1. Koextrusionsadapter für eine Extrusionsanlage mit mehreren Extrudern und einem von diesen gespeisten Werkzeug zur Herstellung eines Koextrusionsverbundes aus thermoplastischem Kunststoff, wobei der Koextrusionsadapter (1) einen Zentralkanal (10) mit einem einlassseitigen Ende (100) für den Anschluss eines Extruders und einem auslassseitigen Ende (101) für den Anschluss des Werkzeuges aufweist, und der Koextrusionsadapter (1) ferner mindestens einen Koextrusionskanal (11, 12, 13) mit Einlassende (110, 120, 130) und Auslassende (112, 122, 132) aufweist, wobei an das Einlassende (110, 120, 130) jeweils ein weiterer Extruder anschließbar ist und das Auslassende (112, 122, 132) stromabwärts des einlassseitigen Endes (100) des Zentralkanals (10) in diesen einmündet und jedem Auslassende (112, 122, 132) des mindestens einen Koextrusionskanals (11, 12, 13) zugeordnet Verstellvorrichtungen vorgesehen sind, die aus einer Mehrzahl von Verstellelementen (6) bestehen, welche sich gemeinsam über die Breite des Auslassendes (112, 122, 132) erstrecken und mittels Stellantrieben (7) unabhängig voneinander in der Weise verstellbar sind, dass die lichte Weite des jeweiligen Breitenabschnittes des Auslassendes (112, 122, 132) veränderbar ist, **dadurch gekennzeichnet, dass** die Verstellelemente (6) an ihrem dem Auslassende (112, 122, 132) zugewandten Ende einen keilförmigen Justierabschnitt (60) aufweisen, dessen eine Keilfläche (60a) dem Zentralkanal (10) und dessen andere Keilfläche (60b) dem Auslassende (112, 122, 132) des Koextrusionskanals (11, 12, 13) zugewandt ist und der Justierabschnitt (60) der Verstellelemente (6) mittels der Stellantriebe (7) um eine in Breitenerstreckung des Auslassendes (112, 122, 132) verlaufende Achse (A) verschwenkbar ist, so dass bei einer Vergrößerung der lichten Weite des jeweiligen Breitenabschnittes des Auslassendes (112, 122, 132) der entsprechende Breitenabschnitt des Zentralkanals (10) verengt wird und umgekehrt.

2. Koextrusionsadapter nach Anspruch 1, **dadurch gekennzeichnet, dass** die Verstellelemente (6) benachbart zum Justierabschnitt (60) einen zylindrisch verdickten Lagerungsabschnitt (61) aufweisen, dessen Mittelachse die Schwenkachse (A) bildet und die Verstellelemente (6) mit dem zylindrischen Lagerungsabschnitt (61) in entsprechende Aufnahmen (21, 31) im Koextrusionsadapter (1) verschwenkbar einsteckbar sind.

3. Koextrusionsadapter nach Anspruch 1 oder 2, **dadurch gekennzeichnet, dass** die Verstellelemente (6) an ihrem dem Justierabschnitt (60) abgewandten Ende mit einem Verstellhebel (63) ausgebildet sind, der mit dem Stellantrieb (7) verbindbar ist.

4. Koextrusionsadapter nach einem der Ansprüche 1 bis 3, **dadurch gekennzeichnet, dass** die Stellantriebe (7) jeweils eine von der Außenseite des Koextrusionsadapters (1) her zugängliche und in diesen ein- bzw. aus diesem ausschraubbare Gewindestange (71) umfassen, die an ihrem dem Verstellelement (6) zugewandten Ende mit einem Mitnehmer (70) für das Verstellelement (6) versehen ist.

5. Koextrusionsadapter nach einem der Ansprüche 1 bis 4, **dadurch gekennzeichnet, dass** die Stellantriebe (7) mit einer Messeinrichtung für den Verstellweg ausgerüstet sind.

6. Koextrusionsadapter nach einem der Ansprüche 1 bis 5, **dadurch gekennzeichnet, dass** ein Verbindungselement für die Stellantriebe (7) der sich gemeinsam über die Breite eines Auslassendes (112, 122, 132) erstreckenden Verstellelemente (6) vorgesehen ist, mittels dessen diese Stellantriebe (7) gemeinsam parallel verstellbar sind.

7. Koextrusionsadapter nach einem der Ansprüche 1 bis 6, **dadurch gekennzeichnet, dass** der mindestens eine Koextrusionskanal (11, 12, 13) dem Auslassende (112, 122, 132) vorgelagert einen Verteilbereich (111, 121, 131) aufweist, in welchem ein Stauelement (8) angeordnet ist.

8. Koextrusionsadapter nach Anspruch 7, **dadurch gekennzeichnet, dass** das Stauelement (8) austauschbar ist.

9. Koextrusionsadapter nach einem der Ansprüche 1 bis 8, **dadurch gekennzeichnet, dass** er zwei Seitenplatten (4, 5) umfasst, zwischen denen zwei voneinander unter Ausbildung des Zentralkanals (10) beabstandete Kanalteile (2, 3) angeordnet sind und jedes Kanalteil (2, 3) mit spiegelsymmetrisch zur Mittelachse (M) des Zentralkanals (10) angeordneten Koextrusionskanälen (11, 12, 13) und zugehörigen Verstellelementen (6) und Stellantrieben (7) ausgebildet ist.

10. Koextrusionsadapter nach Anspruch 9, **dadurch gekennzeichnet, dass** die Einlassenden (110, 120, 130) der Koextrusionskanäle (11' 12, 13) im Bereich der Trennfugen (T) zwischen den Seitenteilen (4, 5) und den Kanalteilen (2, 3) angeordnet sind.

11. Koextrusionsadapter nach einem der Ansprüche 1 bis 10, d**adurch gekennzeichnet, dass** der Koextrusionskanal (11, 12, 13) bei Nichtgebrauch von den zugehörigen Verstellelementen (6) gegenüber dem Zentralkanal (10) abdichtbar ist.

## Claims

1. Coextrusion adapter for an extrusion installation with a plurality of extruders and a tool fed by those for producing a composite coextrusion structure of thermoplastic material, wherein the coextrusion adapter (1) has a central conduit (10) with an end (100) at an inlet side for connecting an extruder and an end (101) at an outlet side for connecting the tool, the coextrusion adapter (1) has at least one coextrusion conduit (11, 12, 13) with an inlet end (110, 120, 130) and an outlet end (112, 122, 132), wherein a second extruder can be respectively connected to the inlet end (110, 120, 130), the outlet end (112, 122, 132) terminates downstream of the end (100) at the inlet side of the central conduit (10) in the central conduit, and adjusting devices are provided, assigned to each of the outlet ends (112, 122, 132) of the at least one coextrusion conduit (11, 12, 13), consisting of a plurality of adjusting elements (6) that together extend over the width of the outlet end (112, 122, 132) and which can be adjusted independently of each other by actuating drives (7) in such a way that the inside diameter of the respective transverse section of the outlet end (112, 122, 132) can be changed, **characterized in that** at their end facing the outlet end (112, 122, 132) the adjusting elements (6) have a wedge-shape adjusting section (60) with one wedge surface (60a) facing the central conduit (10) and the other wedge surface (60b) facing the outlet end (112, 122, 132) of the coextrusion conduit (11, 12, 13), and the adjusting section (60) of the adjusting elements (6) is pivotal around an axis (A) extending over the width dimension of the outlet end (112, 122, 132) by the actuating drives (7) in such a way that when an increase of the inside diameter of the respective transverse section of the outlet end (112, 122, 132) occurs the corresponding transverse section of the central conduit (10) is narrowed, and vice versa.

2. Coextrusion adapter in accordance with claim 1, **characterized in that** the adjusting elements (6) have a cylindrically thickened seating section (61) adjoining the adjusting section (60) with a center axis that forms the pivot axis (A), and the adjusting elements (6) can be pivotably inserted with the cylindrical seating section (61) in corresponding receptacles (21, 31) in the coextrusion adapter (1).

3. Coextrusion adapter in accordance with one of the claims 1 or 2, **characterized in that** the adjusting elements (6) have an adjusting lever (63) on their end facing away from the adjusting section (60), which can be connected with the actuating drive (7).

4. Coextrusion adapter in accordance with one of the claims 1 to 3, **characterized in that** the actuating drives (7) comprise a threaded rod (71), respectively, which is accessible from the outside of the coextrusion adapter (1) and can be screwed into and out of the coextrusion adapter (1), and which has on its end facing the adjusting element (6) a contact element (70) for the adjusting element (6).

5. Coextrusion adapter in accordance with one of the claims 1 to 4, **characterized in that** actuating drives (7) have a measuring device for the displacement path.

6. Coextrusion adapter in accordance with one of the claims 1 to 5, **characterized in that** the actuating drives (7) of the adjusting elements (6) extending together over the width of an outlet end (112, 122, 132) have a connecting element by which these actuating drives (7) can be displaced together in parallel.

7. Coextrusion adapter in accordance with one of the claims 1 to 6, **characterized in that** at least one extrusion conduit (11, 12, 13) has a distribution area (111, 121, 131) located upstream of the outlet end (112, 122, 132), and a dam element (8) is arranged in the distribution area (111, 121, 131).

8. Coextrusion adapter in accordance with claim 7, **characterized in that** the dam element (8) is exchangeable.

9. Coextrusion adapter in accordance with one of the claims 1 to 8, **characterized in that** it has two lateral plates (4, 5) and two conduit elements (2, 3) arranged between those, the conduit element (2, 3) being spaced apart from each other and thereby forming the central conduit (10), and each of the conduit elements (2, 3) has coextrusion conduits (11, 12, 13) arranged laterally reversed with respect to the center axis (M) of the central conduit (10) and associated adjusting elements (6) and actuating drives (7).

10. Coextrusion adapter in accordance with claim 9, **characterized in that** inlet ends (110, 120, 130) of the coextrusion conduits (11, 12, 13) are arranged near the joints (T) between the lateral elements (4, 5) and the conduit elements (2, 3).

11. Coextrusion adapter in accordance with one of the claims 1 to 10, **characterized in that** when not used, the coextrusion conduit (11, 12, 13) is sealed with respect to the central conduit (10) by the associated adjusting elements (6).

## Revendications

1. Adaptateur de co-extrusion pour une installation de co-extrusion comprenant plusieurs extrudeuses et un outil alimenté par celles-ci pour fabriquer un composite de coextrusion en matière synthétique thermoplastique, l'adaptateur de co-extrusion (1) présentant un canal central (10) avec une extrémité du côté entrée (100) pour le raccordement d'une extrudeuse et une extrémité du côté sortie (101) pour le raccordement de l'outil, et l'adaptateur de coextrusion (1) présentant en outre au moins un canal de co-extrusion (11, 12, 13) avec une extrémité d'entrée (110, 120, 130) et une extrémité de sortie (112, 122, 132), dans lequel une autre extrudeuse peut à chaque fois être raccordée à l'extrémité d'entrée (110, 120, 130) et l'extrémité de sortie (112, 122, 132) en aval de l'extrémité d'entrée (100) du canal central (10) débouche dans celui-ci et des dispositifs de réglage associés à chaque extrémité de sortie (112, 122, 132) dudit au moins un canal de co-extrusion (11, 12, 13) sont prévus et sont constitués d'une pluralité d'éléments de réglage (6) qui s'étendent ensemble sur la largeur de l'extrémité de sortie (112, 122, 132) et qui peuvent être réglés indépendamment les uns des autres au moyen de mécanismes d'entraînement (7) de telle manière que la cote de passage de la section en largeur respective de l'extrémité de sortie (112, 122, 132) puisse être changée, **caractérisé en ce que** les éléments de réglage (6) présentent à leur extrémité orientée vers l'extrémité de sortie (112, 122, 132) une section d'ajustage en forme de clavette (60) dont une surface de clavette (60a) est orientée vers le canal central (10) et dont l'autre surface de clavette (60b) est orientée vers l'extrémité de sortie (112, 122, 132) du canal de co-extrusion (11, 12, 13) et la section d'ajustage (60) des éléments de réglage (6) peut être amenée à pivoter autour d'un axe s'étendant dans le sens de la largeur de l'extrémité de sortie (112, 122, 132) au moyen des mécanismes d'entraînement (7) de sorte que, dans le cas d'un accroissement de la cote de passage de la section en largeur respective de l'extrémité de sortie (112, 122, 132), la section en largeur correspondante du canal central (10) est rétrécie et vice-versa.

2. Adaptateur de co-extrusion selon la revendication 1, **caractérisé en ce que** les éléments de réglage (6) présentent à proximité de la section d'ajustage (60) une section d'appui (61) cylindriquement épaissie dont l'axe central forme l'axe de pivotement (A) et les éléments de réglage (6) avec la section d'appui cylindrique (61) peuvent être insérés de manière à pivoter dans des logements correspondants (21, 31) dans l'adaptateur de co-extrusion (1)

3. Adaptateur de co-extrusion selon la revendication 1 ou 2, **caractérisé en ce que** les éléments de réglage (6) sont configurés à leur extrémité opposée à la section d'ajustage (60) avec un levier de réglage (63) qui peut être relié au mécanisme d'entraînement (7).

4. Adaptateur de co-extrusion selon une quelconque des revendications 1 à 3, **caractérisé en ce que** les mécanismes d'entraînement (7) comprennent respectivement une tige filetée (71) accessible par le côté extérieur de l'adaptateur de co-extrusion (1) et pouvant être vissée dans celui-ci ou encore dévissée de celui-ci, qui est pourvue à son extrémité orientée vers l'élément de réglage (6) d'un entraîneur (70) pour l'élément de réglage (6).

5. Adaptateur de co-extrusion selon une quelconque des revendications 1 à 4, **caractérisé en ce que** les mécanismes d'entraînement (7) sont équipés d'un dispositif de mesure pour la course de réglage.

6. Adaptateur de co-extrusion selon une quelconque des revendications 1 à 5, **caractérisé en ce qu'**il est prévu un élément de liaison pour les mécanismes d'entraînement (7) des éléments de réglage (6) s'étendant ensemble sur la largeur d'une extrémité de sortie (112, 122, 132) au moyen duquel les mécanismes d'entraînement (7) peuvent être réglés ensemble en parallèle.

7. Adaptateur de co-extrusion selon une quelconque des revendications 1 à 6, **caractérisé en ce que** ledit au moins un canal de co-extrusion (11, 12, 13) présente une zone de distribution (111, 121, 131) placée avant l'extrémité de sortie (112, 122, 132) dans laquelle un élément de retenue (8) est disposé.

8. Adaptateur de co-extrusion selon la revendication 7, **caractérisé en ce que** l'élément de retenue (8) peut être remplacé.

9. Adaptateur de co-extrusion selon une quelconque des revendications 1 à 8, **caractérisé en ce qu'**il comprend deux plaques latérales (4, 5) entre lesquelles sont disposées deux parties de canal (2, 3) espacées l'une de l'autre de manière à former le canal central (10) et chaque partie de canal (2, 3) est configurée avec des canaux de co-extrusion (11, 12, 13) disposés en symétrie miroir par rapport à l'axe central (M) du canal central (10) et des éléments de réglage (6) et des mécanismes d'entraînement (7) y afférents.

10. Adaptateur de co-extrusion selon la revendication 9, **caractérisé en ce que** les extrémités d'entrée (110, 120, 130) des canaux de co-extrusion (11, 12, 13) sont disposées dans la zone des joints de séparation (T) entre les parties latérales (4, 5) et les parties de canal (2, 3).

11. Adaptateur de co-extrusion selon une quelconque des revendications 1 à 10, **caractérisé en ce que** le canal de co-extrusion (11, 12, 13) en cas de non-utilisation peut être obturé par rapport au canal central (10) par les éléments de réglage (6) associés.
